(19) Europäisches Patentamt
European Patent Office
Office européen des brevets

(11) **EP 2 872 570 B1**

(12) **FASCICULE DE BREVET EUROPEEN**

(45) Date de publication et mention
de la délivrance du brevet:
**23.05.2018 Bulletin 2018/21**

(51) Int Cl.:
*C09C 3/10* (2006.01)    *C09C 1/02* (2006.01)
*C08F 22/00* (2006.01)    *C08K 3/00* (2018.01)
*C08F 220/06* (2006.01)    *C08F 220/28* (2006.01)
*C08K 3/26* (2006.01)

(21) Numéro de dépôt: **13744681.1**

(22) Date de dépôt: **03.07.2013**

(86) Numéro de dépôt international:
**PCT/FR2013/051566**

(87) Numéro de publication internationale:
**WO 2014/009633 (16.01.2014 Gazette 2014/03)**

(54) **UTILISATION D'UN POLYMERE PEIGNE POUR PREPARER UNE SUSPENSION CONTENANT DU CARBONATE DE CALCIUM ET PRESENTANT UNE SENSIBILITE A LA TEMPERATURE REDUITE**

VERWENDUNG EINES KAMMPOLYMERS ZUR HERSTELLUNG EINER SUSPENSION MIT CALCIUMCARBONAT UND MIT REDUZIERTER TEMPERATUREMPFINDLICHKEIT

USE OF A COMB POLYMER FOR PREPARING A SUSPENSION CONTAINING CALCIUM CARBONATE AND HAVING REDUCED TEMPERATURE SENSITIVITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256803**

(43) Date de publication de la demande:
**20.05.2015 Bulletin 2015/21**

(73) Titulaire: **COATEX**
**69730 Genay (FR)**

(72) Inventeurs:
• **JACQUEMET, Christian**
**69005 France (FR)**

• **MONGOIN, Jacques**
**69650 Quincieux (FR)**
• **SUAU, Jean-Marc**
**69480 Lucenay (FR)**

(74) Mandataire: **Balmefrezol, Ludovic Francis Pierre et al**
**Coatex SAS**
**35, rue Ampère**
**69730 Genay (FR)**

(56) Documents cités:
**FR-A1- 2 894 998    FR-A1- 2 939 428**
**FR-A1- 2 940 295    FR-A1- 2 974 502**

EP 2 872 570 B1

**Description**

La présente invention concerne l'utilisation d'un copolymère peigne dans la préparation d'une suspension aqueuse comprenant du carbonate de calcium, ladite suspension montrant une sensibilité à la température réduite.

De nos jours, l'industrie doit fournir des suspensions de carbonate de calcium pour une grande variété d'applications. Les suspensions de carbonate de calcium sont des suspensions de solides insolubles dans un milieu liquide qui est généralement un mélange d'eau et d'au moins un additif. La constitution précise de la suspension, par exemple la granulométrie du produit de carbonate de calcium ou la nature de l'additif dans la suspension, dépend de l'utilisation prévue de la suspension. Les suspensions de carbonate de calcium sont utilisées dans une grande variété d'applications incluant le papier, la peinture, le plastique et le béton.

La préparation des suspensions de carbonate de calcium implique des procédés de broyage et/ou de dispersion. La réduction de la granulométrie du produit de carbonate de calcium nécessite généralement l'utilisation d'un moyen de mélange nécessitant une quantité importante énergie. La suspension peut donc devenir très chaude en raison de l'énergie induite par le cisaillement des broyeurs et des disperseurs. Les températures peuvent par exemple atteindre 65°C ou plus, par exemple une température comprise entre 70°C et 105°C.
A de telles températures, la viscosité des suspensions peut augmenter de manière spectaculaire, ce qui conduit à des suspensions ne pouvant plus être travaillées. Des additifs doivent être utilisés pour éviter ce problème.

Cependant, si les additifs utilisés pour contrôler la viscosité se détériorent à des températures élevées, les particules de carbonate de calcium floculent et les machines se bloquent. Il existe ensuite un risque élevé d'endommagement des unités de production, comme par exemple des unités de broyage. Pour éviter une telle situation, il est nécessaire de refroidir l'équipement de manière continue. Ceci peut néanmoins s'avérer coûteux.

Par conséquent, il existe un besoin pour des additifs améliorés qui contrôlent, réduisent ou empêchent une augmentation de la viscosité des suspensions comprenant du carbonate de calcium à des températures élevées, par exemple à des températures supérieures à 65°C, c'est-à-dire des additifs utiles pour réduire la sensibilité à la température des suspensions contenant du carbonate de calcium.
Par ailleurs, il serait souhaitable d'utiliser des additifs qui stabilisent les suspensions aqueuses contenant du carbonate de calcium à haut extrait sec, à des températures élevées.

Un autre objet de la présente invention concerne des additifs qui vont être compatibles dans des formulations de papier, peinture, plastique et béton.

Il a été découvert que les objets susmentionnés sont atteints par l'utilisation d'un copolymère peigne particulier dans la préparation d'une suspension aqueuse ayant une sensibilité à la température réduite, ladite suspension comprenant un carbonate de calcium, la viscosité de ladite suspension aqueuse mesurée à 20 s$^{-1}$ par un rhéomètre HAAKE Rheostress variant entre 25 et 1 000 mPa.s à 20°C et à 90°C,

- selon laquelle la viscosité spécifique dudit polymère mesurée à 20°C et à une concentration en polymère de 45 g/l diffère de la viscosité spécifique dudit polymère mesurée à 70°C par une différence de viscosité spécifique $\Delta\eta_{sp}$, ladite valeur absolue de $\Delta\eta_{sp}$ étant inférieure ou égale à 0,5,
- selon laquelle ledit polymère n'a pas de point de trouble compris entre 20°C et 95°C mesuré dans de l'eau, et
- selon laquelle ledit polymère a une charge spécifique de -10 C/g à -600 C/g à pH 8.

Les inventeurs ont, en fait, découvert de manière étonnante que l'utilisation d'un polymère peigne ayant une combinaison des trois caractéristiques susmentionnées (une différence de viscosité spécifique $\Delta\eta_{sp}$, pas de point de trouble dans une plage de température définie et une charge spécifique dans une plage définie) est particulièrement avantageuse pour préparer et obtenir des suspensions aqueuses contenant du carbonate de calcium ayant une sensibilité à la température réduite. Les polymères peigne ayant les caractéristiques susmentionnées peuvent réduire la sensibilité à la chaleur d'une telle suspension et empêcher une augmentation non souhaitée de la viscosité de la suspension. Par exemple, les polymères peigne selon l'invention empêchent la suspension aqueuse d'atteindre une viscosité supérieure à 1 000 mPa.s (rhéomètre HAAKE Rheostress à 20s$^{-1}$) à des températures élevées, par exemple à des températures supérieures à 65°C, par exemple à 90°C.

Le document FR 2 940 295 concerne la mise en oeuvre d'une classe particulière de copolymères peigne dans des formulations plastiques chargées. La présence simultanée de groupements (A-O) et (B-O) différents l'un de l'autre dans le macromonomère b) utilisé permet d'améliorer la stabilité thermique du copolymère final. Cette fonction apportée par le macromonomère b) au copolymère final s'avère utile dans un certain nombre d'applications, notamment celui des formulations plastiques chargées qui sont soumises au cours des opérations de transformation à des températures élevées. Toutefois, ce document ne divulgue pas l'utilisation d'un copolymère peigne particulier dans la préparation d'une suspension aqueuse comprenant du carbonate de calcium et possédant une sensibilité à la température réduite. Le document FR 2 894 998 s'intéresse à la fabrication des sauces de couchage présentant une rétention d'eau et une viscosité Brookfield améliorées. Ce document ne décrit pas l'utilisation d'un copolymère peigne spécifique permettant de préparer des suspensions aqueuses de CaCO₃ ayant une sensibilité à la température réduite.

Le document FR 2 974 502 décrit l'utilisation comme agent développeur de la couleur, dans une composition cosmétique pour le maquillage, d'au moins un copolymère (méth)acrylique peigne particulier. Ce document ne décrit pas l'utilisation d'un copolymère peigne spécifique pour préparer des suspensions aqueuses de CaCO₃ présentant une sensibilité à la température réduite.

La demande de brevet WO 01/96007 décrit des copolymères solubles dans l'eau et faiblement anioniques. Ces polymères sont présentés comme permettant d'obtenir des suspensions aqueuses de pigments minéraux et/ou de charges minérales moyennement à fortement concentrées en matière minérale, stables dans le temps, sans sédimentation, faiblement sensibles au pH et à la force ionique des milieux mises en oeuvre dans les formulations de fabrication du papier ou de pétrole, et ayant un faible potentiel Zêta. Ces polymères ne sont pas décrits comme étant utiles dans la préparation d'une suspension aqueuse de carbonate de calcium ayant une sensibilité à la température réduite, plus précisément ayant une viscosité comprise entre 25 et 1 000 mPa.s à 20°C et 90°C. On peut noter, en particulier, qu'aucune mesure de viscosité des suspensions n'est réalisée à température élevée, c'est-à-dire à 90°C, et qu'aucune mesure de viscosité spécifique du copolymère n'est réalisée à une température élevée, c'est-à-dire à 70°C, et donc aucun calcul de différence de viscosité spécifique n'est réalisé dans ce document. De plus, les copolymères décrits dans ce document peuvent provenir de la polymérisation d'un monomère anionique présentant une fonction phosphorique, qui est considéré comme non souhaitable en termes de de pollution environnementale. Par ailleurs, certains des copolymères décrits dans cette demande comprennent des monomères réticulants, qui ne sont pas non plus souhaitables dans le contexte de la présente invention pour des raisons de rhéologie. D'autres copolymères de cette demande comprennent des composés d'acrylamide qui sont aujourd'hui considérés comme potentiellement toxiques pour les êtres humains et les animaux.

Aux fins de la présente invention, le terme « carbonate de calcium » fait référence à une substance qui comprend au moins 80 % en poids de carbonate de calcium. Le terme « carbonate de calcium » comprend le carbonate de calcium broyé (GCC), c'est-à-dire un carbonate de calcium obtenu à partir de sources naturelles, telles que le calcaire, le marbre, la calcite ou la chaux, ainsi que le carbonate de calcium précipité (PCC), c'est-à-dire une substance synthétisée, généralement obtenue par précipitation suite à une réaction de dioxyde de carbone et d'hydroxyde de calcium (chaux hydratée) dans un environnement aqueux ou par précipitation d'une source de calcium et de carbonate dans de l'eau. De plus, le carbonate de calcium précipité peut également être le produit d'une introduction de sels de calcium et de carbonate, de chlorure de calcium et de carbonate de sodium par exemple, dans un environnement aqueux.

Le PCC peut être la vatérite, la calcite ou l'aragonite.

Le composant de carbonate de calcium peut être un carbonate de calcium broyé qui a été obtenu par broyage humide d'un carbonate de calcium.

Selon la présente invention, le terme « suspension » signifie une suspension aqueuse qui comprend des solides insolubles et facultativement au moins un additif.

Selon la présente invention, le terme « sensibilité à température réduite » signifie que la viscosité de la suspension est maintenue entre 25 et 1 000 mPa.s, lorsqu'elle est mesurée par un rhéomètre HAAKE Rheostress à 20 s⁻¹, à 20°C et à 90°C, c'est-à-dire lorsque la suspension est exposée à des températures élevées.

Le terme « température élevée » signifie une température supérieure à 60°C et plus préférablement une température comprise entre 65 et 105°C, par exemple 90°C.

Le terme « stabilisation » signifie que la viscosité de la suspension est maintenue entre 25 et 1 000 mPa.s, lorsque la suspension est exposée à une température supérieure à 60°C et plus préférablement à une température comprise entre 65 et 105°C.

Selon la présente invention, la suspension aqueuse ayant une sensibilité à la température réduite comprenant un carbonate de calcium et au moins un copolymère peigne selon la présente invention possède une viscosité mesurée par un rhéomètre HAAKE Rheostress à 20 s⁻¹ qui est comprise entre 25 et 1 000 mPa.s à 20°C et à 90°C. Il faut noter qu'à des valeurs de viscosités supérieures à 1 000 mPa.s, il existe un risque de blocage et d'endommagement des unités de production, telles que les unités de broyage. Par conséquent, un objet de la présente invention est de maintenir la viscosité de la suspension en-dessous de 1 000 mPa.s non seulement à température ambiante, mais également à des températures plus élevées.

Aux fins de la présente invention, le terme « copolymère peigne » fait référence à un copolymère composé d'une chaîne principale, également nommée squelette, et de macromonomères peigne ramifiés.

Selon un premier aspect de l'invention, la viscosité spécifique du copolymère peigne mesurée à 20°C à une concentration en polymère de 45 g/l diffère de la viscosité spécifique dudit polymère mesurée à 70°C par une différence de viscosité spécifique $\Delta\eta_{sp}$, de sorte que la valeur absolue de $\Delta\eta_{sp}$ soit inférieure ou égale à 0,5.

Le terme « différence de viscosité spécifique » dans la signification de la présente invention est défini comme la différence des viscosités spécifiques mesurés à 70°C et à 20°C.

$$\Delta\eta_{sp} = \eta_{sp\,70\,°C} - \eta_{sp\,20\,°C}$$

Dans le cadre de la présente invention, le terme « viscosité spécifique » est défini comme la différence de viscosité relative mesurée à une température déterminée (par exemple 20°C et 70°C) moins 1.

$$\eta_{sp} = \eta_{rel} - 1$$

La viscosité relative utilisée ici est le quotient de la viscosité de la solution $\eta$ et de la viscosité du solvant $\eta_0$

$$\eta_{rel} = \frac{\eta}{\eta_0}$$

où la viscosité du solvant $\eta_0$ est définie comme la viscosité du solvant pur à une température déterminée (par exemple 20°C ou 70°C) et la viscosité de la solution $\eta$ est définie comme la viscosité du copolymère peigne dissous dans le solvant pur à une température déterminée (par exemple 20°C ou 70°C) et à une concentration en polymère déterminée (par exemple 45 g/l).

Cependant, pour déterminer la viscosité relative, il est suffisant de mesurer le temps d'écoulement t (de la solution) et $t_0$ (du solvant) à une température donnée (par exemple 20°C ou 70°C) si les conditions aux limites sont constantes. Par conséquent, la viscosité relative peut être définie par

$$\eta_{rel} = \frac{t}{t_0}$$

et donc, la viscosité spécifique peut être définie par

$$\eta_{sp} = \frac{t}{t_0} - 1.$$

Dans le cadre de la présente invention, le terme « différence de viscosité spécifique » est défini comme la différence des viscosités spécifiques mesurées à 70°C et à 20°C.

$$\Delta\eta_{sp} = \eta_{sp\,70\,°C} - \eta_{sp\,20\,°C}$$

La viscosité spécifique du polymère est obtenue à partir d'une solution aqueuse de polymère ayant une concentration en polymère de 45 g/l dans de l'eau. Les temps d'élution t et $t_0$ sont mesurés à 20°C et à 70°C et $\eta_{sp}$ et $\Delta\eta_{sp}$ sont calculées selon les formules mentionnées ci-dessus.

Selon un deuxième aspect de la présente invention, le copolymère peigne n'a pas de point de trouble entre 20°C et 95°C mesuré dans de l'eau.

Le « point de trouble du polymère » est la température à laquelle les polymères dissous dans l'eau ne sont plus totalement solubles à pression atmosphérique, mais précipitent, donnant à l'eau une apparence trouble.

Selon un troisième aspect de l'invention, le copolymère peigne a une charge spécifique de -10 C/g à -600 C/g à pH 8.

Ceci signifie que le copolymère peigne selon la présente invention est un copolymère peigne chargé anioniquement, c'est-à-dire que la charge totale ou nette (c'est-à-dire la somme de toutes les charges positives et négatives) du copolymère est négative.

Selon un mode de réalisation de l'invention, ledit copolymère a une charge spécifique de -10 C/g à - 550 C/g à pH 8.

Selon un autre mode de réalisation de l'invention, ledit copolymère a une charge spécifique de - 100 C/g à - 550 C/g à pH 8.

Selon un autre mode de réalisation de l'invention, ledit copolymère a une charge spécifique de - 200 C/g à - 550 C/g à pH 8.

Selon l'invention, le copolymère peigne est un polymère synthétique ayant une charge anionique sur le squelette et des chaînes latérales non chargées.

Ces chaînes latérales du polymère peigne chargé anioniquement peuvent comprendre des composés contenant un époxyde polymérisé, comme par exemple un oxyde d'éthylène, un oxyde de propylène, un oxyde de 1-butylène. Il est préférable que les chaînes latérales de polyéther comprennent un oxyde de polyéthylène ou un oxyde de polypropylène ou un copolymère mixte comprenant un oxyde d'éthylène et un oxyde de propylène et aient au niveau de leur extrémité libre un groupe hydroxyle ou un groupe alkyle comprenant de 1 à 4 de carbone, qui est une chaîne linéaire ou ramifiée.

Selon l'invention, le copolymère peigne consiste en :

a) au moins un monomère qui est un acide acrylique et/ou un acide méthacrylique, et
b) au moins un macromonomère de formule (I) :

$$R - X - R' \qquad (I)$$

selon laquelle :

- X représente m motifs d'oxyde de propylène (PO) et n motifs d'oxyde d'éthylène (EO), lesdits motifs de PO et EO étant placés de manière aléatoire ou régulière, où m et n sont des entiers inférieurs ou égaux à 150, dont au moins un d'entre eux n'est pas égal à zéro,
- R représente une fonction insaturée polymérisable,
- R' représente l'hydrogène ou un groupe alkyle comprenant de 1 à 4 atomes de carbone.

Selon un mode de réalisation de la présente invention, le copolymère peigne est tel que R dans le macromonomère de formule (I) représente la fonction méthacrylate, la fonction méthacryluréthane, la fonction acrylate, la fonction vinyle ou la fonction allyle. Selon un autre mode de réalisation de la présente invention, le copolymère peigne se compose, exprimé en pourcentage en poids de chacun de ses composants :

a) de 5 à 60 % d'au moins un monomère qui est un acide acrylique et/ou un acide méthacrylique, et
b) de 40 à 95 % d'un macro monomère de formule (I).

Selon un autre mode de réalisation de la présente invention, le copolymère peigne consiste en :

a) des monomères d'acide acrylique,
b) des monomères d'acide méthacrylique, et
c) des macromonomères de formule (I),

dans lequel le pourcentage en poids des monomères d'acide acrylique est inférieur au pourcentage en poids des monomères d'acide méthacrylique.

Selon ce mode de réalisation de la présente invention, les inventeurs ont réalisé en fait que pour résoudre le problème susmentionné d'obtention de suspensions aqueuses contenant du carbonate de calcium ayant une sensibilité à la température réduite, il est avantageux d'utiliser un copolymère peigne ayant :

- un squelette négativement chargé comprenant des monomères d'acide acrylique et d'acide méthacrylique polymérisés de manière aléatoire, et dans lequel le pourcentage en poids des monomères d'acide méthacrylique est supérieur au pourcentage en poids des monomères d'acide acrylique, et
- des chaînes latérales non chargées comprenant des composés contenant un époxyde polymérisé.

On sait que les homopolymères d'acide acrylique sont plus efficaces pour disperser des pigments que les homopolymères d'acide méthacrylique. De manière étonnante, selon ce mode de réalisation de l'invention, les copolymères peigne ayant un squelette chargé négativement comprenant des monomères d'acide acrylique et d'acide méthacrylique polymérisés de manière aléatoire et où le pourcentage en poids des monomères d'acide méthacrylique est supérieur au pourcentage en poids des monomères d'acide acrylique, montrent une meilleure efficacité pour réduire la sensibilité à la température des suspensions de carbonate de calcium, la viscosité de ladite suspension mesurée par un rhéomètre HAAKE Rheostress à 20 s$^{-1}$ étant entre 25 et 1 000 mPa.s à 20°C et à 90°C.

Selon un mode de réalisation de la présente invention, le copolymère peigne utilisé dans la préparation d'une suspension aqueuse ayant une sensibilité à la température réduite, ladite suspension comprenant un carbonate de calcium, la viscosité de ladite suspension aqueuse mesurée par un rhéomètre HAAKE Rheostress à 20 s$^{-1}$ variant entre 25 et 1 000 mPa.s à 20°C et à 90°C,

- selon laquelle la viscosité spécifique dudit polymère mesurée à 20°C et à une concentration en polymère de 45 g/l diffère de la viscosité spécifique dudit polymère mesurée à 70°C par une différence de viscosité spécifique $\Delta\eta_{sp}$, ladite valeur absolue de $\Delta\eta_{sp}$ étant inférieure ou égale à 0,5,
- selon laquelle ledit polymère n'a pas de point de trouble entre 20°C et 95°C mesuré dans de l'eau, et
- selon laquelle ledit polymère a une charge spécifique de -10 C/g à -600 C/g à pH 8,

ledit copolymère peigne consistant en :

A1) des monomères d'acide acrylique,
A2) des monomères d'acide méthacrylique, et
B) des macromonomères de formule (I) :

$$R - X - R' \qquad (I)$$

dans laquelle :

- X représente m motifs d'oxyde de propylène (PO) et n motifs d'oxyde d'éthylène (EO), lesdits motifs de PO et EO étant arrangés de manière aléatoire ou régulière, où m et n sont des entiers inférieurs ou égaux à 150, dont au moins un d'entre eux n'est pas égal à zéro,
- R représente une fonction insaturée polymérisable,
- R' représente l'hydrogène ou un groupe alkyle comprenant de 1 à 4 atomes de carbone

ledit copolymère étant tel que le pourcentage en poids des monomères d'acide acrylique est inférieur au pourcentage en poids des monomères d'acide méthacrylique.

Selon un mode de réalisation de la présente invention, le copolymère peigne consiste en, exprimé en un pourcentage en poids de chacun de ses composants :

A1) de 1 à 10 % de monomères d'acide acrylique,
A2) de 10 à 50 % de monomères d'acide méthacrylique, et
B) de 40 à 90 % de macromonomères de formule (I).

Selon un mode de réalisation de la présente invention, le copolymère peigne consiste en, exprimé en un pourcentage en poids de chacun de ses composants :

A1) de 1 à 8 % de monomères d'acide acrylique,
A2) de 30 à 50 % de monomères d'acide méthacrylique, et
B) de 40 à 70 % de macromonomères de formule (I).

Selon un mode de réalisation de la présente invention, le copolymère peigne consiste en, exprimé en un pourcentage en poids de chacun de ses composants :

A1) de 3 à 6 % de monomères d'acide acrylique,
A2) de 20 à 25 % de monomères d'acide méthacrylique, et
B) de 70 à 77 % de macromonomères de formule (I).

Selon un autre mode de réalisation de la présente invention, le copolymère peigne consiste en, exprimé en un pourcentage en poids de chacun de ses composants :

A1) de 3 à 6 % de monomères d'acide acrylique,
A2) de 30 à 35 % de monomères d'acide méthacrylique, et
B) de 60 à 67 % de macromonomères de formule (I).

Selon un mode de réalisation de la présente invention, le copolymère peigne est tel que m dans le macromonomère de formule (I) est compris entre 0 et 10.

Selon un mode de réalisation de la présente invention, le copolymère peigne est tel que n dans le macromonomère de formule (I) est compris entre 10 et 150.

Selon un mode de réalisation de la présente invention, le copolymère peigne est tel que n et m dans le macromonomère de formule (I) sont tels que la somme n+m est supérieure ou égale à 17.

Selon un mode de réalisation de la présente invention, le copolymère peigne présente un poids moléculaire un poids moléculaire inférieur à 100 000 g/mol, par exemple compris entre 10 000 et 100 000 g/mol, par exemple entre 10 000 et 40 000 g/mol, par exemple entre 10 000 et 20 000 g/mol.

Ledit copolymère est obtenu par les procédés connus de copolymérisation radicalaire conventionnelle en solution, en vrac, en émulsion directe ou inversée, en suspension ou par précipitation dans des solvants appropriés, en présence de systèmes catalytiques et d'agents de transfert connus, ou encore, par des procédés de polymérisation radicalaire contrôlés tels que le procédé connu sous le nom de transfert de chaînes par addition-fragmentation réversible (RAFT), le procédé connu sous le nom de polymérisation radicalaire par transfert d'atomes (ATRP), le procédé connu sous le nom de polymérisation médiée par des nitroxydes (NMP), ou encore, le procédé connu sous le nom de polymérisation radicalaire médiée par des cobaloximes.

Il est obtenu sous une forme acide et éventuellement distillée. Il peut également être partiellement ou totalement neutralisé par un ou plusieurs agents de neutralisation choisis parmi les hydroxydes de sodium, de calcium, de magnésium et de potassium et leurs mélanges ou choisis parmi les amines.

Selon un mode de réalisation de la présente invention, ledit copolymère peigne est partiellement ou totalement neutralisé.

Selon un autre mode de réalisation de la présente invention, ledit copolymère est 100 % neutralisé avec de l'hydroxyde de sodium.

Il convient de noter dans le cadre de la présente invention que les différents modes de réalisation peuvent être combinés les uns avec les autres.

Le polymère peigne est présent en une quantité de 0,01 à 10 % en poids, sur la base du poids total des solides dans la suspension, par exemple de 0,05 à 5 % en poids, ou par exemple de 0,1 à 3,0 % en poids, ou par exemple de 0,2 à 2,0 % en poids, ou par exemple de 0,25 à 1,5 % en poids, ou par exemple de 0,5 à 1,25 % en poids.

Selon un autre mode de réalisation, la suspension aqueuse selon la présente invention se compose d'eau, d'un carbonate de calcium tel que défini ci-dessus et d'un copolymère peigne selon la présente invention. Selon ce mode de réalisation, la suspension aqueuse ne comprend aucun additif autre que le copolymère peigne décrit dans la présente demande, c'est-à-dire qu'elle ne comprend pas, par exemple, un autre polymère ou dispersant.

La suspension aqueuse de carbonate de calcium peut être obtenue par un procédé comprenant 1/ une étape de dispersion et 2/ une étape de broyage. En variante, la suspension aqueuse de carbonate de calcium peut être obtenue par un procédé comprenant 1/ une étape de broyage et 2/ une étape de dispersion. Selon un autre procédé, la suspension aqueuse de carbonate de calcium peut être obtenue par un procédé comprenant 1/ une étape de broyage jusqu'à une teneur en solides déterminée SC1 et une distribution granulométrique déterminée PSD1, 2/ une étape de dispersion et 3/ une étape de broyage jusqu'à une teneur en solides déterminée SC2 et une distribution granulométrique déterminée PSD2. Selon un autre procédé, l'étape de dispersion et l'étape de mélange peuvent être réalisées en même temps.

L'étape de dispersion consiste en la préparation, sous agitation, d'une suspension de carbonate de calcium. Plus précisément, elle peut en particulier consister en l'introduction de tout ou d'une partie du copolymère peigne selon l'invention dans la phase aqueuse (c'est-à-dire l'eau), puis le carbonate de calcium, de sorte à obtenir une suspension aqueuse ayant une teneur en carbonate de calcium déterminée. En d'autres termes, l'étape de dispersion peut consister en le mélange d'au moins un copolymère peigne avec de l'eau, puis le mélange du composant de carbonate de calcium avec la solution de copolymère peigne. En variante, elle peut consister en l'introduction de tout ou d'une partie du carbonate de calcium dans la phase aqueuse (c'est-à-dire le l'eau), puis du copolymère peigne selon l'invention. Dans ce cas, l'étape de dispersion consiste en le mélange du composant de carbonate de calcium avec de l'eau, puis le mélange d'au moins un copolymère peigne avec la suspension de carbonate de calcium.

L'étape de dispersion peut être réalisée dans un mixeur ou dans n'importe quel autre équipement qui a la capacité de mélanger de manière homogène ou d'homogénéiser les composants de la suspension. L'homme du métier s'adapte aux conditions de mélange et/ou d'homogénéisation, telles que la vitesse de mélange et la température, et selon l'équipement du procédé disponible.

Le terme « broyage » signifie que les particules minérales sont divisées en particules plus petites. L'étape de broyage peut se produire dans un broyeur ou dans n'importe quel autre équipement qui a la capacité de diviser les particules de carbonate de calcium en particules plus petites.

L'étape de dispersion et l'étape de mélange peuvent être réalisées à température ambiante, c'est-à-dire à 20°C ou à d'autres températures, par exemple à des températures variant entre 5 et 140°C. Un chauffage peut être introduit par cisaillement interne ou par une source externe ou une combinaison des deux.

Le procédé de préparation d'une suspension aqueuse de carbonate de calcium peut également comprendre une étape de concentration. Le terme « concentration » signifie la réduction de la teneur en eau de la suspension, de sorte à ajuster la teneur en solides de la suspension aqueuse. L'étape de concentration peut être réalisée par les procédés connus de l'homme du métier. Elle peut en particulier être réalisée par un moyen thermique, par exemple au moyen d'un évaporateur ou de n'importe quel autre équipement d'évaporation adapté.

La suspension aqueuse de carbonate de calcium peut être séchée par n'importe quel procédé approprié connu de l'art. Elle peut en particulier être séchée de manière thermique, par exemple au moyen d'un sèche-cheveux, ou elle peut être séchée de manière mécanique, par exemple au moyen de filtres.

Selon un mode de réalisation, la suspension aqueuse est une suspension aqueuse contenant une teneur élevée en solides, par exemple une suspension ayant une teneur en solides d'au moins 45 % en poids, sur la base du poids total de la suspension aqueuse.

Selon un mode de réalisation préféré, la suspension aqueuse selon la présente invention a une teneur en solides de 45 à 82 % en poids, de préférence de 60 à 78 % en poids, les plus préférablement de 70 à 78 % en poids, sur la base du poids total de la suspension aqueuse.

Selon un mode de réalisation de l'invention, le polymère peigne est utilisé dans la préparation d'une suspension ayant une distribution granulométrique telle qu'environ 60 % en poids des particules ont un diamètre équivalent inférieur ou égal à 2 μm.

Selon un mode de réalisation de la présente invention, la suspension aqueuse présente un pH qui varie entre 7 et 12.

Selon un mode de réalisation de la présente invention, la quantité dudit copolymère peigne est calculée de sorte que la suspension aqueuse contenant du carbonate de calcium présente une viscosité mesurée par un rhéomètre HAAKE Rheostress à 20 s$^{-1}$ comprise entre 25 et 800 mPa.s à 20°C et à 90°C, par exemple entre 30 et 500 mPa.s à 20°C et à 90°C, ou par exemple entre 35 et 300 mPa.s à 20°C et à 90°C.

Selon un mode de réalisation, aucun additif, par exemple aucun dispersant, ayant une charge spécifique supérieure à -500 C/g à pH 8 n'est ajouté à la suspension aqueuse.

La suspension aqueuse de la présente invention ainsi obtenue peut être utilisée dans de nombreuses applications, par exemple papier, plastique, peinture et/ou béton.

Un autre objet de la présente invention est un copolymère peigne pour une utilisation dans la préparation d'une suspension aqueuse ayant une sensibilité à la température réduite, ladite suspension comprenant un carbonate de calcium, la viscosité de ladite suspension aqueuse mesurée par un rhéomètre HAAKE Rheostress à 20 s$^{-1}$ étant entre 25 et 1 000 mPa.s à 20°C et à 90°C,

selon lequel la viscosité spécifique dudit copolymère mesurée à 20°C et à une concentration en copolymère de 45 g/l diffère de la viscosité spécifique dudit copolymère mesurée à 70°C par une différence de viscosité spécifique $\Delta\eta_{sp}$, dans lequel la valeur absolue de $\Delta\eta_{sp}$ est inférieure ou égale à 0,5,

selon lequel ledit copolymère n'a pas de point de trouble compris entre 20°C et 95°C mesuré dans l'eau, et

selon lequel ledit copolymère a une charge spécifique de -10 C/g à -600 C/g à pH 8.

Un autre objet de la présente invention est un copolymère peigne comprenant :

a) au moins un monomère qui est un acide acrylique et/ou un acide méthacrylique, et
b) au moins un macromonomère de formule (I) :

$$R - X - R' \qquad (I)$$

- X représente m motifs d'oxyde de propylène (PO) et n motifs d'oxyde d'éthylène (EO), lesdits motifs de PO et EO étant arrangés de manière aléatoire ou régulière, où m et n sont des entiers inférieurs ou égaux à 150, dont au moins un d'entre eux n'est pas égal à zéro,
- R représente une fonction insaturée polymérisable,
- R' représente l'hydrogène ou un groupe alkyle comprenant de 1 à 4 atomes de carbone.

Un autre objet de la présente invention est un copolymère peigne consistant en :

A1) au moins un monomère qui est un acide acrylique,
A2) au moins un monomère qui est un acide méthacrylique, et
B) au moins un macromonomère de formule (I) :

$$R - X - R' \qquad (I)$$

- X représente m motifs d'oxyde de propylène (PO) et n motifs d'oxyde d'éthylène (EO), lesdits motifs de PO et EO étant arrangés de manière aléatoire ou régulière, où m et n sont des entiers inférieurs ou égaux à 150, dont au moins un d'entre eux n'est pas égal à zéro,
- R représente une fonction insaturée polymérisable,
- R' représente l'hydrogène ou un groupe alkyle comprenant de 1 à 4 atomes de carbone,

dans lequel le pourcentage en poids des monomères d'acide acrylique est inférieur au pourcentage en poids des monomères d'acide méthacrylique.

Les exemples qui suivent permettent de mieux appréhender la présente invention, sans en limiter la portée.

**Exemples**

La charge spécifique des polymères des exemples est mesurée par la demande en polymère cationique qui est nécessaire pour obtenir une valeur de charge de zéro, détectée par titrage de polyélectrolytes jusqu'au point neutre de charge 0mV. L'équipement nécessaire pour obtenir la valeur est le détecteur MüteK PCD-02 et le détecteur MüteK PCD-03. Si nécessaire, l'échantillon est ajusté à pH 8,0 ±0,1 avec du NaOH (0,1 M) avant la mesure. Ce procédé est conçu pour la détection de la charge (résultat en ml) d'un échantillon aqueux et le calcul de la quantité de charge spécifique (unité : C/g). Le réactif cationique utilisé pour réaliser la mesure est le poly(chlorure de diallyldimethylammonium) (Poly-DADMAC) (0,001 N).

Le point de trouble des polymères des exemples est mesuré par un essai de turbidité, dans une solution aqueuse de 0,2 mol/l de NaCl ajustée à pH 10 avec du NaOH (concentration en polymère de 45 g/l). Le tube à essai est immergé dans un bain d'huile dont la température est ajustée. Une fois que la température voulue est atteinte, la température est maintenue à un niveau constant pendant au moins 15 minutes. Ensuite, le tube à essai est retiré du bain et la turbidité est immédiatement évaluée visuellement.

La différence de viscosité spécifique est déterminée par un système Lauda PVS, sur des solutions aqueuses de polymère (concentration en polymère de 45 g/l). Les mesures sont effectuées sur un tube capillaire Hubbelohde DIN (Schott) de type I (K = 0,010).

La masse moléculaire des copolymères selon l'invention est déterminée par chromatographie d'exclusion stérique (CES).

Les copolymères selon l'invention sont préparés selon des méthodes connues de copolymérisation radicalaire. Un exemple de procédé de préparation est décrit ci-dessous dans l'exemple 1.

**EXEMPLE 1**

Cet exemple illustre l'utilisation de différents polymères (essais 1 à 7) dans la préparation d'une suspension aqueuse de carbonate de calcium broyé (GCC) à 71% d'extrait sec ayant une distribution granulométrique telle qu'environ 60 ± 1 % en poids des particules ont un diamètre sphérique équivalent inférieur à 2 $\mu$m.

L'essai 1 illustre l'utilisation d'un homopolymère d'acide acrylique ayant une charge spécifique qui n'est pas comprise entre -10 C/g et -600 C/g à pH 8. On utilise un homopolymère d'acide acrylique 100 % neutralisé avec de l'hydroxyde de sodium (poids moléculaire : 5 600 g/mol), commercialement disponible sous le nom de Rheosperse® 3030 (société Coatex, France).

Les essais 2 à 5 illustrent l'utilisation d'un copolymère peigne selon l'invention, présentant la combinaison des trois caractéristiques revendiquées (différence de viscosité spécifique, pas de point de trouble entre 20°C et 95°C, une charge spécifique de -10 à -600 C/g à pH 8) et présentant :

- un squelette chargé négativement se composant de monomères d'acide acrylique et d'acide méthacrylique polymérisés de manière aléatoire et dans lequel le pourcentage en poids des monomères d'acide méthacrylique est supérieur au pourcentage en poids des monomères d'acide acrylique, et
- des chaînes latérales non chargées se composant de composés contenant un époxyde polymérisé.

Plus précisément :

Essai 2 :

Copolymère peigne 100 % neutralisé avec de l'hydroxyde de sodium (poids moléculaire : 12 900 g/mol).

Le polymère a la composition suivante (en % en poids) :

- 7,3% de monomères d'acide acrylique,
- 47,3% de monomères d'acide méthacrylique, et
- 45,4% de macromonomères qui sont un ester méthacrylique de poly(oxyde d'éthylène) ayant un poids moléculaire moyen de 750 g/mol et ayant un groupe méthyle au niveau de la chaîne terminale.

Le procédé de préparation de ce copolymère est le suivant :

Dans un réacteur de 1 L muni d'une agitation mécanique et d'un chauffage de type bain d'huile, on pèse 243 g d'eau.

Dans un premier bécher, on pèse 15,18 g d'acide acrylique, 98,38 g d'acide méthacrylique, 94,43 g de méthacrylate de poly(oxyde d'éthylène) ayant un poids moléculaire moyen de 750 g/mol et ayant un groupe méthyle au niveau de la chaîne terminale et 147,69 g d'eau.

Dans une deuxième bécher, on pèse 5,7 g de dimercapto-1,8-dioxa-3,6-octane.

Dans un troisième bécher, on pèse 5,886 g de persulfate d'ammonium et 50 g d'eau.

Le réacteur est mis à chauffer à 86°C et les divers réactifs contenus dans les 3 béchers sont ajoutés d'une manière continue à l'aide de pompes en 3 h.

Le milieu est encore cuit 1 h puis il est neutralisé avec de la soude 50 % jusqu'à pH 8.

Les autres copolymères exemplifiés ci-après sont préparés selon un procédé similaire.

Essai 3 :

Copolymère peigne 100 % neutralisé avec de l'hydroxyde de sodium (poids moléculaire : 17 900 g/mol).

Le polymère a la composition suivante (en % en poids) :

- 4,7 % de monomères d'acide acrylique,
- 31,7 % de monomères d'acide méthacrylique, et
- 63,6 % de macromonomères qui sont un ester méthacrylique de poly(oxyde d'éthylène) ayant un poids moléculaire moyen de 2 000 g/mol et ayant un groupe méthyle au niveau de la chaîne terminale.

Essai 4 :

Copolymère peigne 100 % neutralisé avec de l'hydroxyde de sodium (poids moléculaire : 35 000 g/mol).

Le polymère a la composition suivante (en % en poids) :

- 2,1 % de monomères d'acide acrylique,
- 21,9 % de monomères d'acide méthacrylique, et
- 76 % de macromonomères qui sont un ester méthacrylique de poly(oxyde d'éthylène) ayant un poids moléculaire moyen de 5 000 g/mol et ayant un groupe méthyle au niveau de la chaîne terminale.

Essai 5 :

Copolymère peigne 100 % neutralisé avec de l'hydroxyde de sodium (poids moléculaire : 18 500 g/mol).

Le polymère a la composition suivante (en % en poids) :

- 4,0 % de monomères d'acide acrylique,
- 26,7 % de monomères d'acide méthacrylique, et
- 69,3 % de macromonomères qui sont un ester méthacrylique de poly(oxyde d'éthylène et oxyde de propylène) avec environ 2 motifs de PO et 43 motifs de EO ayant un poids moléculaire moyen de 2 000 g/mol et ayant un atome d'hydrogène au niveau de la chaîne terminale.

Les essais 6 et 7 illustrent l'utilisation de polymères peigne commercialisés sous le nom de gamme Melpers® (société BASF) ayant une charge spécifique supérieure à -200 C/g (en l'espèce -169 C/g et -170 C/g), plus précisément respectivement le produit MelPers® 2450 et le produit MelPers® 4343.

On prépare des suspensions aqueuses de carbonate de calcium broyé (GCC), ayant une teneur en solides de 71 ± 1 %. 0,6 % en poids sec d'un polymère selon l'un des essais 1 à 7, sur la base du poids total des solides dans la suspension, sont introduits dans un récipient contenant deux litres d'eau. Ensuite, 5 kg de carbonate de calcium broyé, marbre d'origine italienne, sont introduits sous agitation dans le récipient.

Les suspensions sont ensuite introduites dans un broyeur horizontal de 1,41 (Dynomill®) afin de broyer le carbonate.

Le broyage est stoppé lorsqu'on obtient un produit final ayant une distribution granulométrique telle qu'environ 60 ± 1 % en poids des particules ont un diamètre sphérique équivalent inférieur à 2 μm.

La distribution granulométrique, et plus particulièrement les caractéristiques granulométriques des particules de carbonate de calcium sont déterminées par un procédé de sédimentation déterminé à partir d'un appareil Sedigraph™ 5100, vendu par la société MICROMERITICS™, c'est-à-dire une analyse du comportement de sédimentation dans un domaine gravimétrique. Le procédé et l'instrument sont connus de l'homme du métier et sont couramment utilisés pour déterminer la taille de grain des charges et des pigments.

Les polymères utilisés dans l'exemple 1 présentent les caractéristiques suivantes :

Tableau 1

| Essai n° | Point de trouble (°C) | Charge spécifique (C/g de polymère sec) | $\Delta\eta_{sp}$ |
|---|---|---|---|
| 1 | > 100 | - 925 | 0,04 |
| 2 | > 100 | - 494 | 0,18 |
| 3 | > 100 | - 337 | 0,28 |
| 4 | > 95 | - 279 | 0,43 |
| 5 | > 100 | - 330 | 0,43 |
| 6 | > 100 | - 169 | 0,27 |
| 7 | > 100 | - 170 | 0,34 |

Viscosité à différentes températures

La viscosité de chaque suspension est mesurée à 20°C et 90°C avec un rhéomètre HAAKE RheoStress 600 (Thermo Electro Corportion) équipé d'un système de mesure DC 60/2° Ti (222 - 1229) et MP/DC 60 L (222 - 1546). Les valeurs de viscosités indiquées sont mesurées à une vitesse de cisaillement de 20 s$^{-1}$. La température varie automatiquement entre 20°C et 90°C avec un régulateur de température universel. Pour éviter l'évaporation à la surface de la suspension, le système est scellé avec une graisse de silicone et est recouvert avec une couche fine d'huile minérale (Aldrich n° d'article : 33,077-9).

Tableau 2

| Essai numéro | Viscosité de la suspension aqueuse à 20s$^{-1}$ (mPa.s) | |
|---|---|---|
| | 20°C | 90°C |
| 1 | 70 | 150 |
| 2 | 30 | 30 |
| 3 | 30 | 20 |
| 4 | 30 | 90 |
| 5 | 30 | 90 |
| 6 | 30 | 90 |
| 7 | 50 | 540 |

Les résultats du tableau 2 montrent que l'ensemble des polymères des essais 1 à 7 permettent de maîtriser la viscosité des suspensions de carbonate de calcium broyé (GCC) chauffées à 20°C et 90°C.

Le polymère de l'essai 1 présente une charge spécifique fortement négative, ce qui affecte de manière importante la charge de surface des particules de carbonate de calcium, et peut alors constituer un problème majeur dans certaines applications, par exemple la fabrication du papier ou le couchage du papier (mauvaise interaction avec la cellulose du papier, problème de rétention de charge lors du couchage). Il est alors nécessaire de neutraliser ces particules par l'ajout d'additifs cationiques.

Les polymères des essais 2 à 7 quant à eux présentent une charge spécifique comprise entre - 10 et - 600 C/g à pH 8. De tels polymères évitent les problèmes susmentionnés, tout en permettant de préparer des suspensions aqueuses de carbonate de calcium ayant une sensibilité à la température réduite. De telles suspensions peuvent être utilisées dans diverses applications, notamment la fabrication et le couchage du papier.

**EXEMPLE 2**

Cet exemple illustre l'utilisation de différents polymères (essais 8 à 11) dans la préparation d'une suspension aqueuse de GCC à 75 % d'extrait sec ayant une distribution granulométrique telle qu'environ 90 $\pm$ 1 % en poids des particules ont un diamètre sphérique équivalent inférieur à 2 $\mu$m.

L'essai 8/8bis :

Cet essai illustre l'utilisation d'un polymère peigne en dehors de la portée de la présente invention dans la préparation d'une suspension aqueuse de GCC. Ce polymère peigne est 100 % neutralisé avec de l'hydroxyde de sodium (poids moléculaire : 37 500 g/mol).

Le polymère présente la composition suivante (en % en poids) :

- 13,7 % de monomères d'acide acrylique,
- 6,6 % de monomères d'acide méthacrylique, et
- 79,7 % de macromonomères qui sont un ester méthacrylique de poly(oxyde d'éthylène) ayant un poids moléculaire moyen de 2 000 g/mol et ayant un groupe méthyle au niveau de la chaîne terminale.

L'essai 9 :

Cet essai illustre l'utilisation d'un copolymère peigne selon l'invention dans la préparation d'une suspension aqueuse de GCC. Ce copolymère peigne est 100 % neutralisé avec de l'hydroxyde de sodium (poids moléculaire : 17 900 g/mol).

Le polymère présente la composition suivante (en % en poids) :

- 4,7 % de monomères d'acide acrylique,
- 31,7 % de monomères d'acide méthacrylique, et
- 63,6 % de macromonomères qui sont un ester méthacrylique de poly(oxyde d'éthylène) ayant un poids moléculaire moyen de 2 000 g/mol et ayant un groupe méthyle au niveau de la chaîne terminale.

Les essais 10/10bis et 11 :

Ces essais illustrent l'utilisation de polymères peigne commercialisés sous le nom de gamme Melpers® (société BASF) ayant une charge spécifique supérieure à -200 C/g (en l'espèce -169 C/g et -170 C/g), plus précisément respectivement le produit MelPers® 2450 et le produit MelPers® 4343.

Diverses suspensions aqueuses de carbonate de calcium broyé (GCC), ayant chacune une teneur en solides de 75 $\pm$ 1 %, sont préparées dans cet exemple. 1 % en poids sec d'un polymère selon l'essai 8, 9, 10 ou 11 ou 1,2 % en poids sec d'un polymère selon l'essai 8bis, 10bis ou 11bis, sur la base de la quantité totale des solides dans la suspension, est introduit dans un récipient contenant deux litres d'eau. Ensuite, 5 kg de carbonate de calcium broyé, marbre d'origine italienne, sont introduits sous agitation dans un récipient.

La charge spécifique, le point de trouble et la viscosité spécifique, ainsi que le poids moléculaire des polymères sont mesurés selon les méthodes dans l'exemple 1.

Les suspensions sont ensuite introduites dans un broyeur horizontal de 1,4l (Dynomill®) afin de broyer le carbonate.

Le broyage est stoppé lorsqu'on obtient un produit final ayant une distribution granulométrique telle qu'environ 90 $\pm$ 1 % en poids des particules ont un diamètre sphérique équivalent inférieur à 2 $\mu$m.

Les polymères utilisés dans l'exemple 2 présentent les caractéristiques suivantes :

Tableau 3

| Essai numéro | Point de trouble (°C) | Charge spécifique (C/g de polymère sec) | $\Delta\eta_{sp}$ |
|---|---|---|---|
| 8 et 8 bis | Nd | - 198 | 0,83 |
| 9 | > 100 | - 337 | 0,28 |
| 10 et 10 bis | > 100 | - 169 | 0,26 |
| 11 et 11bis | > 100 | - 170 | 0,35 |

Viscosité à différentes températures

La viscosité de chaque suspension est mesurée à 20°C et 90°C avec un rhéomètre HAAKE RheoStress 600 (Thermo Electro Corportion) équipé d'un système de mesure DC 60/2° Ti (222 - 1229) et MP/DC 60 L (222 - 1546). Les valeurs de viscosités indiquées sont mesurées à une vitesse de cisaillement de 20 s$^{-1}$. La température varie automatiquement entre 20°C et 90°C avec un régulateur de température universel. Pour éviter l'évaporation à la surface de la suspension, le système est scellé avec une graisse de silicone et est recouvert avec une couche fine d'huile minérale (Aldrich n° d'article : 33,077-9).

Tableau 4

| Essai numéro | Viscosité de la suspension aqueuse à 20s⁻¹ (mPa.s) | |
|---|---|---|
| | 20°C | 90°C |
| 8 | 370 | 11 540 |
| 8bis | 300 | 8 750 |
| 9 | 160 | 180 |
| 10 | 380 | 550 |
| 10bis | 200 | 500 |
| 11 | 570 | 1 730 |
| 11bis | 1200 | 2300 |

Le polymère de l'essai 8 (1 % en poids sec de polymère, sur la base de la quantité totale des solides dans la suspension), en dehors de la portée de l'invention du fait que la viscosité spécifique dudit polymère mesurée à 20°C et à une concentration en polymère de 45 g/l diffère de la viscosité spécifique dudit polymère mesurée à 70°C par une différence de viscosité spécifique $\Delta\eta_{sp}$, ladite valeur absolue de $\Delta\eta_{sp}$ étant supérieure à 0,5, ne permet pas d'obtenir une viscosité de la suspension à 90°C comprise entre 25 et 1 000 mPa.s. Ajuster la teneur à 1,2% en poids sec (essai 8bis) ne permet pas de réduire la viscosité à 90°C de la suspension à moins de 1 000 mPa.s.

## EXEMPLE 3

Cet exemple illustre l'utilisation de différents polymères (essais 12 à 16) dans la préparation d'une suspension aqueuse de GCC à 75% d'extrait sec ayant une distribution granulométrique telle qu'environ 90 $\pm$ 1 % en poids des particules ont un diamètre sphérique équivalent inférieur à 2 $\mu$m.

L'essai 12 :

Cet essai illustre l'utilisation d'un copolymère peigne selon l'invention dans la préparation d'une suspension aqueuse de GCC. Ce copolymère peigne (poids moléculaire : 22 250 g/mol, pH : 7,1) est 100 % neutralisé avec de l'hydroxyde de sodium.
Le polymère présente la composition suivante (en % en poids) :

- 4,25 % de monomères d'acide acrylique,
- 24,0 % de monomères d'acide méthacrylique, et
- 71,75 % de macromonomères qui sont un ester méthacrylique de poly(oxyde d'éthylène) ayant un poids moléculaire moyen de 2 000 g/mol et ayant un groupe méthyle au niveau de la chaîne terminale.

L'essai 13 :

Cet essai illustre l'utilisation d'un polymère peigne en dehors de la portée de la présente invention dans la préparation d'une suspension aqueuse de GCC. Ce polymère peigne est 100 % neutralisé avec de l'hydroxyde de sodium (poids moléculaire : 37 500 g/mol).
Le polymère présente la composition suivante (en % en poids) :

- 13,7 % de monomères d'acide acrylique,
- 6,6 % de monomères d'acide méthacrylique, et
- 79,7 % de macromonomères qui sont un ester méthacrylique ayant un poids moléculaire moyen de 3 000 g/mol et constitué de 70% en masse de poly(oxyde d'éthylène) et 30% en masse de poly(oxyde de propylène).

L'essai 14 :

Cet essai illustre l'utilisation d'un polymère peigne en dehors de la portée de la présente invention dans la préparation d'une suspension aqueuse de GCC. Ce polymère peigne est 100 % neutralisé avec de l'hydroxyde de sodium (poids moléculaire : > 100 000 g/mol).
Le polymère présente la composition suivante (en % en poids) :

- 13,7 % de monomères d'acide acrylique,
- 6,6 % de monomères d'acide méthacrylique, et
- 79,7 % de macromonomères qui sont un ester méthacrylique ayant un poids moléculaire moyen de 3 000 g/mol et constitué de 70% en masse de poly(oxyde d'éthylène) et 30% en masse de poly(oxyde de propylène).

L'essai 15 :

Cet essai illustre l'utilisation d'un copolymère peigne hors invention dans la préparation d'une suspension aqueuse de GCC. Ce copolymère peigne est 100 % neutralisé avec de l'hydroxyde de sodium (poids moléculaire : 15 600 g/mol, pH = 8,5).
Le polymère présente la composition suivante (en % en poids) :

- 28,25 % de monomères d'acide acrylique, et
- 71,75 % de macromonomères qui sont un ester méthacrylique de poly(oxyde d'éthylène) ayant un poids moléculaire moyen de 2 000 g/mol et ayant un groupe méthyle au niveau de la chaîne terminale.

L'essai 16 :

Cet essai illustre l'utilisation d'un copolymère peigne dans la préparation d'une suspension aqueuse de GCC. Ce copolymère peigne est 100 % acide (poids moléculaire : 22 250 g/mol, pH : 2.3).
Le polymère présente la composition suivante (en % en poids) :

- 4,25 % de monomères d'acide acrylique,
- 24,0 % de monomères d'acide méthacrylique, et
- 71,75 % de macromonomères qui sont un ester méthacrylique de poly(oxyde d'éthylène) ayant un poids moléculaire moyen de 2 000 g/mol et ayant un groupe méthyle au niveau de la chaîne terminale.

Diverses suspensions aqueuses de carbonate de calcium broyé (GCC), ayant chacune une teneur en solides de 75 ± 1 %, sont préparées dans cet exemple. 1 % en poids sec d'un polymère selon l'essai 12, sur la base de la quantité totale des solides dans la suspension, est introduit dans un récipient contenant deux litres d'eau. Ensuite, 5 kg de carbonate de calcium broyé, marbre d'origine italienne, sont introduits sous agitation dans un récipient.
La charge spécifique, le point de trouble et la viscosité spécifique, ainsi que le poids moléculaire des polymères sont mesurés selon les méthodes dans l'exemple 1.
Les suspensions sont ensuite introduites dans un broyeur horizontal de 1,41 (Dynomill®) afin de broyer le carbonate.
Le broyage est stoppé lorsqu'on obtient un produit final ayant une distribution granulométrique telle qu'environ 90 ± 1 % en poids des particules ont un diamètre sphérique équivalent inférieur à 2 μm.
Les polymères utilisés dans l'exemple 3 présentent les caractéristiques suivantes :

Tableau 5

| Essai | Point de trouble (°C) | Charge spécifique (C/g de polymère sec) | $\Delta\eta_{sp}$ |
|-------|----------------------|------------------------------------------|-------------------|
| 12 | >95 | - 315 | 0,48 |
| 13 | 22 | - 223 | 0,5 |
| 14 | 22 | - 207 | 0,83 |
| 15 | >95 | - 328 | 0,37 |
| 16 | >95 | - 315 | 0,48 |

Viscosité à différentes températures :

La viscosité de chaque suspension est mesurée à 20°C et 90°C avec un rhéomètre HAAKE RheoStress 600 (Thermo Electro Corportion) équipé d'un système de mesure DC 60/2° Ti (222 - 1229) et MP/DC 60 L (222 - 1546). Les valeurs de viscosités indiquées sont mesurées à une vitesse de cisaillement de 20 s$^{-1}$. La température varie automatiquement entre 20°C et 90°C avec un régulateur de température universel. Pour éviter l'évaporation à la surface de la suspension, le système est scellé avec une graisse de silicone et est recouvert avec une couche fine d'huile minérale (Aldrich n° d'article : 33,077-9).

Tableau 6

| Essai | Viscosité de la suspension aqueuse à 20s$^{-1}$ (mPa.s) | | Observations |
|---|---|---|---|
| | 20°C | 90°C | |
| 12 | 255 | 255 | - |
| 13 | nd | nd | Broyage non terminé, montée en pression dans le broyeur |
| 14 | nd | nd | Mise en suspension impossible |
| 15 | 466 | 738 | Broyage non terminé, montée en pression dans le broyeur |
| 16 | 675 | 1220 | - |

Les polymères des essais 13 à 15, hors invention, ne permettent pas d'obtenir une suspension concentrée de CaCO3 broyée. Le polymère de l'essai 16, sous forme non neutralisée, ne permet pas d'obtenir une suspension de CaCO3 conforme à l'invention, c'est-à-dire ayant une viscosité à 90°C inférieure à 1 000 mPa.s.

**Revendications**

1. Utilisation d'un copolymère peigne dans la préparation d'une suspension aqueuse ayant une sensibilité à la température réduite, ladite suspension comprenant un carbonate de calcium, la viscosité de ladite suspension aqueuse mesurée par un rhéomètre HAAKE Rheostress à 20 s$^{-1}$ variant entre 25 et 1 000 mPa.s à 20°C et à 90°C,

   - selon laquelle la viscosité spécifique dudit polymère mesurée à 20°C et à une concentration en polymère de 45 g/l diffère de la viscosité spécifique dudit polymère mesurée à 70°C par une différence de viscosité spécifique $\Delta\eta_{sp}$, ladite valeur absolue de $\Delta\eta_{sp}$ étant inférieure ou égale à 0,5,
   - selon laquelle ledit polymère n'a pas de point de trouble entre 20°C et 95°C mesuré dans de l'eau, et
   - selon laquelle ledit polymère présente une charge spécifique de -10 C/g à -600 C/g à pH 8,

   ledit copolymère peigne consistant en :

   a) des monomères d'acide acrylique et des monomères d'acide méthacrylique, dans lequel le pourcentage en poids des monomères d'acide méthacrylique est supérieur au pourcentage en poids des monomères d'acide acrylique, et
   b) au moins un macromonomère de formule (I) :

   $$R - X - R' \qquad (I)$$

   selon laquelle :

   - X représente m motifs d'oxyde de propylène (PO) et n motifs d'oxyde d'éthylène (EO), lesdits motifs de PO et EO étant arrangés de manière aléatoire ou régulière, où m et n sont des entiers inférieurs ou égaux à 150, dont au moins un d'entre eux n'est pas égal à zéro,
   - R représente une fonction insaturée polymérisable,
   - R' représente l'hydrogène ou un groupe alkyle comprenant de 1 à 4 atomes de carbone, et

ledit copolymère étant présent en une quantité de 0,01 à 10 % en poids, sur la base du poids total des solides dans la suspension.

**2.** Utilisation selon la revendication 1, selon laquelle ledit copolymère présente une charge spécifique de -10 C/g à -550 C/g à pH 8.

**3.** Utilisation selon l'une quelconque des revendications précédentes, selon laquelle ledit copolymère peigne consiste en, exprimé en pourcentage en poids de chacun de ses composants :

   a) de 5 à 60 % des monomères d'acide acrylique et des monomères d'acide méthacrylique, dans lequel le pourcentage en poids des monomères d'acide méthacrylique est supérieur au pourcentage en poids des monomères d'acide acrylique, et
   b) de 40 à 95 % d'un macro monomère de formule (I).

**4.** Utilisation selon l'une quelconque des revendications précédentes, selon laquelle ledit copolymère peigne consiste en, exprimé en pourcentage en poids de chacun de ses composants :

   A1) de 1 à 10 % de monomères d'acide acrylique,
   A2) de 10 à 50 % de monomères d'acide méthacrylique, et
   B) de 40 à 90 % de macromonomères de formule (I).

**5.** Utilisation selon l'une quelconque des revendications précédentes, selon laquelle m dans le macromonomère de formule (I) est compris entre 0 et 10.

**6.** Utilisation selon l'une quelconque des revendications précédentes, selon laquelle n dans le macromonomère de formule (I) est compris entre 10 et 150.

**7.** Utilisation selon l'une quelconque des revendications précédentes, selon laquelle n et m dans le macromonomère de formule (I) sont tels que la somme n+m est supérieure ou égale à 17.

**8.** Utilisation selon l'une quelconque des revendications précédentes, pour la préparation d'une suspension ayant une distribution granulométrique telle qu'environ au moins 60 % en poids des particules ont un diamètre équivalent inférieur ou égal à 2 $\mu$m.

**9.** Utilisation selon l'une quelconque des revendications précédentes, selon laquelle ledit copolymère présente un poids moléculaire inférieur à 100 000 g/mol.

**10.** Utilisation selon l'une quelconque des revendications précédentes, selon laquelle la préparation de ladite suspension comprend une étape de broyage de carbonate de calcium.

**11.** Utilisation selon l'une quelconque des revendications précédentes, selon laquelle ledit copolymère se présente sous forme partiellement ou totalement neutralisée.

**12.** Copolymère peigne pour une utilisation dans la préparation d'une suspension aqueuse ayant une sensibilité à la température réduite, ladite suspension comprenant un carbonate de calcium, la viscosité de ladite suspension aqueuse mesurée par un rhéomètre HAAKE Rheostress variant entre 25 et 1 000 mPa.s à 20°C et à 90°C,

   - selon lequel la viscosité spécifique dudit copolymère mesurée à 20°C et à une concentration en copolymère de 45 g/l diffère de la viscosité spécifique dudit copolymère mesurée à 70°C par une différence de viscosité spécifique $\Delta\eta_{sp}$, ladite valeur absolue de $\Delta\eta_{sp}$ étant inférieure ou égale à 0,5,
   - selon lequel ledit copolymère n'a pas de point de trouble entre 20°C et 95°C mesuré dans de l'eau, et
   - selon lequel ledit copolymère présente une charge spécifique de -10 C/g à -600 C/g à pH 8,

   ledit copolymère peigne consistant en :

   a) des monomères d'acide acrylique et des monomères d'acide méthacrylique, dans lequel le pourcentage en poids des monomères d'acide méthacrylique est supérieur au pourcentage en poids des monomères d'acide acrylique, et

b) au moins un macromonomère de formule (I) :

$$R - X - R' \qquad (I)$$

selon laquelle :

- X représente m motifs d'oxyde de propylène (PO) et n motifs d'oxyde d'éthylène (EO), lesdits motifs de PO et EO étant arrangés de manière aléatoire ou régulière, où m et n sont des entiers inférieurs ou égaux à 150, dont au moins un d'entre eux n'est pas égal à zéro,
- R représente une fonction insaturée polymérisable,
- R' représente l'hydrogène ou un groupe alkyle comprenant de 1 à 4 atomes de carbone.

## Patentansprüche

1. Verwendung eines Kammcopolymers bei der Herstellung einer wässrigen Suspension mit verringerter Temperaturempfindlichkeit, wobei die Suspension ein Calciumcarbonat enthält, wobei die mit einem HAAKE-Rheostress-Rheometer bei 20 s$^{-1}$ gemessene Viskosität der wässrigen Suspension bei 20 °C und bei 90 °C zwischen 25 und 1000 mPa.s liegt,

   - wobei sich die bei 20 °C und bei einer Polymerkonzentration von 45 g/l gemessene spezifische Viskosität des Polymers von der bei 70 °C gemessenen spezifischen Viskosität des Polymers um eine Differenz der spezifischen Viskosität $\Delta\eta_{sp}$ unterscheidet, wobei der Absolutwert von $\Delta\eta_{sp}$ kleiner oder gleich 0,5 ist,
   - wobei das Polymer keinen in Wasser gemessenen Trübungspunkt zwischen 20 °C und 95 °C aufweist und
   - wobei das Polymer bei pH 8 eine spezifische Ladung von -10 C/g bis -600 C/g aufweist,

   wobei das Kammcopolymer aus:

   a) Acrylsäure-Monomeren und Methacrylsäure-Monomeren, wobei der Gewichtsprozentanteil der Methacrylsäure-Monomere größer ist als der Gewichtsprozentanteil der Acrylsäure-Monomere, und
   b) mindestens einem Makromonomer der Formel (I) :

$$R - X - R' \qquad (I)$$

   besteht, wobei:

   - X für m Propylenoxid(PO)-Einheiten und n Ethylenoxid(EO)-Einheiten steht, wobei die PO- und EO-Einheiten statistisch oder regelmäßig angeordnet sind, wobei m und n ganze Zahlen kleiner oder gleich 150 sind, wobei mindestens eine davon nicht gleich null ist,
   - R für eine polymerisierbare ungesättigte Funktion steht,
   - R' für Wasserstoff oder eine Alkylgruppe mit 1 bis 4 Kohlenstoffatomen steht, und

   wobei das Copolymer in einer Menge von 0,01 bis 10 Gew.-%, bezogen auf das Gesamtgewicht der Feststoffe in der Suspension, vorliegt.

2. Verwendung nach Anspruch 1, wobei das Copolymer bei pH 8 eine spezifische Ladung von -10 C/g bis -550 C/g aufweist.

3. Verwendung nach einem der vorhergehenden Ansprüche, wobei das Kammcopolymer, ausgedrückt als Gewichtsprozentanteil jedes seiner Bestandteile, aus:

   a) 5 bis 60 % Acrylsäure-Monomeren und Methacrylsäure-Monomeren, wobei der Gewichtsprozentanteil der Methacrylsäure-Monomere größer ist als der Gewichtsprozentanteil der Acrylsäure-Monomere, und
   b) 40 bis 95 % eines Makromonomers der Formel (I)

   besteht.

4. Verwendung nach einem der vorhergehenden Ansprüche, wobei das Kammcopolymer, ausgedrückt als Gewichtsprozentanteil jedes seiner Bestandteile, aus:

A1) 1 bis 10 % Acrylsäure-Monomeren,
A2) 10 bis 50 % Methacrylsäure-Monomeren und
B) 40 bis 90 % Makromonomeren der Formel (I)

besteht.

**5.** Verwendung nach einem der vorhergehenden Ansprüche, wobei m in dem Makromonomer der Formel (I) zwischen 0 und 10 liegt.

**6.** Verwendung nach einem der vorhergehenden Ansprüche, wobei n in dem Makromonomer der Formel (I) zwischen 10 und 150 liegt.

**7.** Verwendung nach einem der vorhergehenden Ansprüche, wobei n und m in dem Makromonomer der Formel (I) so beschaffen sind, dass die Summe n+m größer oder gleich 17 ist.

**8.** Verwendung nach einem der vorhergehenden Ansprüche zur Herstellung einer Suspension mit einer solchen Teilchengrößenverteilung, dass ungefähr mindestens 60 Gew.-% der Teilchen einen Äquivalentdurchmesser kleiner oder gleich 2 $\mu$m aufweisen.

**9.** Verwendung nach einem der vorhergehenden Ansprüche, wobei das Copolymer ein Molekulargewicht von weniger als 100.000 g/mol aufweist.

**10.** Verwendung nach einem der vorhergehenden Ansprüche, wobei die Herstellung der Suspension einen Schritt des Mahlens von Calciumcarbonat umfasst.

**11.** Verwendung nach einem der vorhergehenden Ansprüche, wobei das Copolymer in teilweise oder vollständig neutralisierter Form vorliegt.

**12.** Kammcopolymer zur Verwendung bei der Herstellung einer wässrigen Suspension mit verringerter Temperaturempfindlichkeit, wobei die Suspension ein Calciumcarbonat enthält, wobei die mit einem HAAKE-Rheostress-Rheometer gemessene Viskosität der wässrigen Suspension bei 20 °C und bei 90 °C zwischen 25 und 1000 mPa.s liegt,

- wobei sich die bei 20 °C und bei einer Copolymerkonzentration von 45 g/l gemessene spezifische Viskosität des Copolymers von der bei 70 °C gemessenen spezifischen Viskosität des Copolymers um eine Differenz der spezifischen Viskosität $\Delta\eta_{sp}$ unterscheidet, wobei der Absolutwert von $\Delta\eta_{sp}$ kleiner oder gleich 0,5 ist,
- wobei das Copolymer keinen in Wasser gemessenen Trübungspunkt zwischen 20 °C und 95 °C aufweist und
- wobei das Copolymer bei pH 8 eine spezifische Ladung von -10 C/g bis -600 C/g aufweist,

wobei das Kammcopolymer aus:

a) Acrylsäure-Monomeren und Methacrylsäure-Monomeren, wobei der Gewichtsprozentanteil der Methacrylsäure-Monomere größer ist als der Gewichtsprozentanteil der Acrylsäure-Monomere, und
b) mindestens einem Makromonomer der Formel (I) :

$$R - X - R' \qquad (I)$$

besteht, wobei:

- X für m Propylenoxid(PO)-Einheiten und n Ethylenoxid(EO)-Einheiten steht, wobei die PO- und EO-Einheiten statistisch oder regelmäßig angeordnet sind, wobei m und n ganze Zahlen kleiner oder gleich 150 sind, wobei mindestens eine davon nicht gleich null ist,
- R für eine polymerisierbare ungesättigte Funktion steht,
- R' für Wasserstoff oder eine Alkylgruppe mit 1 bis 4 Kohlenstoffatomen steht.

**Claims**

1. Use of a comb copolymer in the preparation of an aqueous slurry with reduced temperature sensitivity, said slurry comprising a calcium carbonate, the viscosity of said aqueous slurry as measured by a HAAKE Rheostress rheometer at 20 s$^{-1}$ ranging from 25 and 1,000 mPa.s measured at 20°C and at 90°C,

   - wherein the specific viscosity of said polymer measured at 20°C and at a polymer concentration of 45 g/l differs from the specific viscosity of said polymer measured at 70°C by a specific viscosity difference $\Delta\eta_{sp}$, wherein the absolute value of $\Delta\eta_{sp}$ is less than or equal to 0.5,
   - wherein said polymer does not have a cloud point between 20°C and 95°C measured in water, and
   - wherein said polymer has a specific charge from - 10 C/g to - 600 C/g at pH 8, said comb copolymer consisting in:

      a) acrylic acid monomers and methacrylic acid monomers, wherein the percentage by weight of monomers of methacrylic acid is greater than the percentage by weight of monomers of acrylic acid, and
      b) at least one macromonomer of formula (I):

$$R - X - R' \qquad (I)$$

      according to which :

         - X represents m units of propylene oxide (PO) and n units of ethylene oxide (EO), said units of PO and EO being disposed either randomly or regularly, wherein m and n are integers less than or equal to 150, with at least one of them being a non-zero,
         - R designates a polymerizable unsaturated group,
         - R' represents hydrogen or an alkyl group containing from 1 to 4 carbon atoms, and said copolymer is present in a quantity from 0.01 to 10 wt. %, based on the total weight of the solids in the slurry.

2. Use according to claim 1, wherein said copolymer has a specific charge from - 10 C/g to - 550 C/g at pH 8.

3. Use according to any of the previous claims, according to which said comb copolymer consists in, expressed as a percentage by weight of each of its components:

      a) from 5 to 60% of acrylic acid monomers and methacrylic acid monomers, wherein the percentage by weight of monomers of methacrylic acid is greater than the percentage by weight of monomers of acrylic acid, and
      b) from 40 to 95% of one macromonomer of formula (I).

4. Use according to any of the previous claims, according to which said comb copolymer consists in, expressed as a percentage by weight of each of its components:

      A1) from 1 to 10% of acrylic acid monomers,
      A2) from 10 to 50% of methacrylic acid monomers, and
      B) from 40 to 90%, of macromonomers of formula (I).

5. Use according to any of the previous claims, according to which m in the macromonomer of formula (I) ranges from 0 and 10.

6. Use according to any of the previous claims, according to which n in the macromonomer of formula (I) ranges from 10 and 150.

7. Use according to any of the previous claims, according to which n and m in the macromonomer of formula (I) are such that the sum n+m is greater than or equal to 17.

8. Use according to any of the previous claims, for the preparation of a slurry having a grain size distribution such that about 60% by weight of the particles have an equivalent diameter of less than or equal to 2 $\mu$m.

9. Use according to any one of the previous claims, according to which said copolymer has a molecular weight below 100,000 g/mol.

**10.** Use according to any one of the previous claims, wherein the preparation of said slurry comprises a calcium carbonate grinding stage.

**11.** Use according to any of the previous claims, wherein said copolymer is partially or totally neutralized.

**12.** Comb copolymer for use in the preparation of an aqueous slurry with reduced temperature sensitivity, said slurry comprising a calcium carbonate, the viscosity of said aqueous slurry as measured by a HAAKE Rheostress rheometer ranging from 25 and 1,000 mPa.s measured at 20°C and at 90°C,

- wherein the specific viscosity of said copolymer measured at 20°C and at a copolymer concentration of 45 g/l differs from the specific viscosity of said copolymer measured at 70°C by a specific viscosity difference $\Delta\eta_{sp}$, wherein the absolute value of $\Delta\eta_{sp}$ is less than or equal to 0.5,
- wherein said copolymer does not have a cloud point between 20°C and 95°C measured in water, and
- wherein said copolymer has a specific charge from -10 C/g to -600 C/g at pH 8, said comb copolymer consisting in:

a) acrylic acid monomers and methacrylic acid monomers, wherein the percentage by weight of monomers of methacrylic acid is greater than the percentage by weight of monomers of acrylic acid, and
b) at least one macromonomer of formula (I):

$$R - X - R' \qquad (I)$$

according to which :

- X represents m units of propylene oxide (PO) and n units of ethylene oxide (EO), said units of PO and EO being disposed either randomly or regularly, wherein m and n are integers less than or equal to 150, with at least one of them being a non-zero,
- R designates a polymerizable unsaturated group,
- R' represents hydrogen or an alkyl group containing from 1 to 4 carbon atoms.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2940295
- FR 2894998
- FR 2974502
- WO 0196007 A